# EUROPÄISCHE PATENTSCHRIFT

(11) **EP 4 410 087 B1**
(45) Veröffentlichungstag und Bekanntmachung des Hinweises auf die Patenterteilung: **20.08.2025**
(21) Anmeldenummer: 23212711.8
(22) Anmeldetag: 28.11.2023
(51) Int. Cl.: A01D 43/073, A01D 43/08

(54) **SELBSTFAHRENDE LANDWIRTSCHAFTLICHE ERNTEMASCHINE**
SELF-PROPELLED AGRICULTURAL HARVESTER
MOISSONNEUSE AGRICOLE AUTOMOTRICE

(30) Priorität: 31.01.2023 DE 102023102282; 31.01.2023 DE 102023000284; 31.01.2023 DE 102023102283; 31.01.2023 DE 102023102284
(43) Veröffentlichungstag der Anmeldung: 07.08.2024
(73) Patentinhaber: CLAAS Selbstfahrende Erntemaschinen GmbH, 33428 Harsewinkel (DE)
(72) Erfinder: DEUFEL, Tobias, 88605 Meßkirch-Menningen (DE); LÖFFLER, Niklas, 88367 Hohentengen (DE)
(74) Vertreter: CLAAS Gruppe

(56) Entgegenhaltungen:
- EP-A1- 1 529 428
- DE-B3- 102012 223 432

## Beschreibung

Die vorliegende Erfindung betrifft eine selbstfahrende landwirtschaftliche Erntemaschine gemäß dem Oberbegriff des Anspruches 1. Weiterhin betrifft die vorliegende Erfindung ein Verfahren zum Betreiben einer selbstfahrenden landwirtschaftlichen Erntemaschine gemäß dem Oberbegriff des Anspruches 14.

Eine selbstfahrende landwirtschaftliche Erntemaschine der eingangs genannten Art ist aus der EP 1 380 204 A1 bekannt. Darin ist eine als Feldhäcksler ausgeführte landwirtschaftliche Erntemaschine beschrieben, mit zumindest einem Nachbeschleunigungsorgan zur veränderlichen Beschleunigung von Erntegut und mit einer dem Nachbeschleunigungsorgan nachgeordneten Überladeeinrichtung zum Auswerfen des Ernteguts in einen Ladebehälter. Zur veränderlichen Beschleunigung des Erntegutes ist die Weite eines Erntegutdurchgangsspaltes des Nachbeschleunigungsorgans, der sich zwischen dem Nachbeschleunigungsorgan und einer diesem gegenüberliegenden Wandung eines Förderkanals ausbildet, mittels einer Spaltänderungsvorrichtung anpassbar. Dadurch wird die Eingriffsintensität des Nachbeschleunigungsorgans auf das Erntegut beeinflusst. Der Spaltänderungsvorrichtung ist eine Steuerungsvorrichtung zugeordnet, die mittels eines generierten Steuersignals die Spaltänderungsvorrichtung ansteuert. Hierzu ist es aus der EP 1 380 204 A1 bekannt, die Weite des Erntegutdurchgangsspaltes in Abhängigkeit vom Erntegutdurchsatz, der mittels Sensoren zur Messung der Feuchtigkeit, der Dichte und der Geschwindigkeit des Erntegutes bestimmt wird, zu verstellen. Die Sensoren sind innerhalb der Erntemaschine entlang der Gutförderstrecke zwischen Einzugsorgan und Überladeeinrichtung angeordnet. Die Reaktion auf Änderungen im Erntegutstrom erfolgt mithin stets zeitlich versetzt. Zudem führt die zunehmende Fahrgeschwindigkeit, mit der eine Erhöhung der Flächenleistung einhergeht, während des Erntevorgangs zu einer weiteren Reduzierung der Reaktionszeit auf sich ändernde Erntebedingungen oder Erntesituationen.

Die DE 10 2020 002 864 A1 beschreibt eine als Feldhäcksler ausgeführte landwirtschaftliche Erntemaschine, mit zumindest einem Nachbeschleunigungsorgan zur Beschleunigung von Erntegut und mit einer dem Nachbeschleunigungsorgan nachgeordneten Überladeeinrichtung zum Auswerfen des Ernteguts in einen Ladebehälter. Das Nachbeschleunigungsorgan dient bei der Grasernte der Beschleunigung des Erntegutes, indem sich das Nachbeschleunigungsorgan in einer Beschleunigungsposition befindet, in der das Nachbeschleunigungsorgan in den Förderkanal hineinragt. Bei der Maisernte befindet sich das Nachbeschleunigungsorgan in einer passiven Position, in welcher das Nachbeschleunigungsorgan aus dem Förderkanal ausgestellt ist und als Gebläse wirkt. In der passiven Position wirkt das Nachbeschleunigungsorgan geringfügig mechanisch mit dem Erntegut zusammen. Das Umschalten zwischen der Beschleunigungsposition und der passiven Position erfolgt auch in Abhängigkeit von dem Vorhandensein einer Konditioniereinrichtung zum Aufbereiten von Maiskörnern.

Ein weiterer Feldhäcksler ist z.B. aus DE 10 2012 223432 B3 bekannt. Eine optische Schwaderkennung ist z.B. aus EP 1 529 428 A1 bekannt.

Ausgehend von dem vorstehend genannten Stand der Technik ist es demnach die Aufgabe der vorliegenden Erfindung, eine landwirtschaftliche Erntemaschine der eingangs genannten Art weiterzubilden, die sich durch eine verbesserte Anpassung der Einstellung des Nachbeschleunigungsorgans an sich ändernde Erntebedingungen oder Erntesituationen auszeichnet.

Diese Aufgabe wird erfindungsgemäß durch die Merkmale des unabhängigen Patentanspruchs 1 gelöst, wobei vorteilhafte Weiterbildungen der erfindungsgemäßen Erntemaschine Gegenstand der entsprechenden abhängigen Patentansprüche 2 bis 13 sind.

Gemäß dem Anspruch 1 wird eine selbstfahrende landwirtschaftliche Erntemaschine, insbesondere ein Feldhäcksler, mit zumindest einem Nachbeschleunigungsorgan zur veränderlichen Beschleunigung von Erntegut und mit einer dem Nachbeschleunigungsorgan nachgeordneten Überladeeinrichtung zum Auswerfen des Ernteguts in einen Ladebehälter vorgeschlagen, wobei zur veränderlichen Beschleunigung des Erntegutes die Weite eines Erntegutdurchgangsspaltes des Nachbeschleunigungsorgans mittels einer Spaltänderungsvorrichtung anpassbar ist, wobei der Spaltänderungsvorrichtung eine Steuerungsvorrichtung zugeordnet ist, die mittels eines generierten Steuersignals die Spaltänderungsvorrichtung ansteuert. Erfindungsgemäß ist vorgesehen, dass die Steuerungsvorrichtung dazu eingerichtet ist, von einer an der Erntemaschine angeordneten Schwaddetektionseinrichtung generierte Daten zu empfangen und auszuwerten, welche Eigenschaften des von der Erntemaschine in Form eines Schwads aufzunehmenden Erntegutes umfassen, und in Abhängigkeit von der Auswertung der Daten der Schwaddetektionseinrichtung die Steuersignale zur Anpassung der Weite des Erntegutdurchgangsspaltes zu generieren.

Der Erfindung liegt die Überlegung zugrunde, im Vorfeldbereich der Erntemaschine auftretende Unregelmäßigkeiten des in Form des Schwads abgelegten Erntegutes frühzeitig zu erkennen, um dadurch auf sich ändernde Erntebedingungen oder Erntesituationen zeitnäher, d.h. vorausschauender, reagieren zu können. Die Ablage des Schwads erfolgt in einem vorangehenden Bearbeitungsprozess, in welchem es bei der Ablage aufgrund verschiedener Einflüsse zu Unregelmäßigkeiten kommen kann. Beispielsweise führen Schwankungen in der Bestandsdichte, Beschädigungen am für die Schwadablage verwendeten Arbeitsgerät und/oder während der Schwadablage auftretende Bedienfehler zu derartigen Unregelmäßigkeiten. Weiteren Einfluss haben die Witterungsbedingen sowohl während und nach der Schwadablage als auch während der Aufnahme des Schwads durch die dafür eingerichtete Erntemaschine.

Insbesondere lässt sich durch die erfindungsgemäß Ansteuerung die Gefahr des Auftretens von Verstopfungen, die durch ungleichmäßige Schwaden bzw. eine ungleiche Erntegutmasse der aufzunehmenden Schwaden verursacht werden, vermeiden oder zumindest minimieren. Wird eine Ungleichmäßigkeit der Schwad erkannt, kann als Reaktion darauf frühzeitig die Weite des Erntegutdurchgangsspaltes verändert werden. Somit werden Störungen im Gutfluss und somit Stillstandszeiten zur Behebung von Verstopfungen im Inneren der Erntemaschine vermieden.

Die Weite des Erntegutdurchgangsspaltes des Nachbeschleunigungsorgans bezeichnet den Abstand zwischen dem Nachbeschleunigungsorgan und einer diesem gegenüberliegenden Wandung eines Förderkanals der Erntemaschine.

Die Steuerungsvorrichtung kann Bestandteil einer Steuer- und Regelungseinheit der Erntemaschine sein, welche darüberhinausgehende Aufgaben übernimmt, oder als eine separate Steuereinheit ausgeführt sein, die mit einer übergeordneten Steuer- und Regelungseinheit der Erntemaschine verbunden ist.

Bevorzugt kann die Schwaddetektionseinrichtung mit zumindest einem optischen Sensor zur Erkennung eines Vorfeldbereiches ausgestattet sein, wobei der Sensor das Vorhandensein und/oder eine Form des Schwads vor der Erntemaschine erkennt und wobei die Schwaddetektionseinrichtung diese Daten an die Steuerungsvorrichtung überträgt. Bei dem zumindest einen optischen Sensor kann es sich bevorzugt um eine Kamera, eine RGB-Kamera, eine 3D-Kamera und/oder ein LIDAR handeln. Unter der Form des Schwads sind die Breite, die Höhe sowie die Kontur zu verstehen. Die Form des Schwads kann Aufschluss über die Gleichmäßigkeit der Verteilung und/oder die aufzunehmende Erntegutmenge geben. Das Vorhandensein des Schwads kann dazu dienen, Änderungen der Erntesituation zu detektieren. Beispielsweise führt eine Lücke im Schwad zu einer temporären Abnahme der zu überladenden Erntegutmenge, auf die durch die Änderung der Weite des Erntegutdurchgangsspaltes reagiert werden kann. Eine vorgenommene Änderung hat dabei nur für den Zeitraum bzw. die Fahrstrecke bestand, bis das Ende Lücke erreicht wird. Eine andere Änderung der Erntesituation stellt das Erreichen des Vorgewendes dar, währenddessen keine Aufnahme von Erntegut erfolgt.

Insbesondere kann die Steuerungsvorrichtung dazu eingerichtet sein, anhand der Form des Schwads auf eine Erntegutdurchsatzmenge zu schließen. Hierzu kann ein Bildverarbeitungssystem vorgesehen sein, welches mit der Steuerungsvorrichtung zusammenwirkt oder Bestandteil der Steuerungsvorrichtung ist.

Gemäß einer Weiterbildung kann die Schwaddetektionseinrichtung mit zumindest einem entlang des Erntegutstroms angeordneten Sensor ausgestattet sein, welcher Eigenschaften des Erntegutes detektiert, wobei die Schwaddetektionseinrichtung diese Daten an die Steuerungsvorrichtung überträgt. Bei dem zumindest einen zur Detektion von Ernteguteigenschaften eingerichteten Sensor kann es sich um einen NIR-Sensor und/oder einen Feuchtigkeitssensor handeln. Die Anordnung entlang des Erntegutstroms kann an beliebiger Stelle innerhalb der Erntemaschine erfolgen. Eine bevorzugte Anordnung des zumindest einen Sensors kann an der Überladeeinrichtung vorgesehen sein. Während der Feuchtigkeitssensor lediglich die Feuchtigkeit des Erntegutes detektiert, detektiert ein NIR-Sensor darüberhinausgehende Informationen zu Eigenschaften des Erntegutes.

Insbesondere kann die Schwaddetektionseinrichtung mit zumindest einer Sensoranordnung ausgeführt sein, die zur Detektion einer Schichthöhe in dem Einzugsorgan eingerichtet ist, wobei die Schwaddetektionseinrichtung die von der zumindest einen Sensoranordnung bestimmten Daten zur Schichthöhe an die Steuerungsvorrichtung zur Bestimmung eines Erntegutdurchsatzes überträgt. Die zumindest eine Sensoranordnung kann zur Erfassung von Kräften, die von zumindest einem Walzenpaar eines dem Nachbeschleunigungsorgan vorgeschalteten Einzugsorgans auf das aufgenommene Erntegut aufgebracht werden, eingerichtet sein. Zusätzlich oder alternativ kann die zumindest eine Sensoranordnung zur Erfassung einer Auslenkung eines Walzenpaares oder der Walzenpaare des Einzugsorgans eingerichtet sein. Die zumindest eine Sensoranordnung, welche zusätzlich zur Bestimmung des Erntegutdurchsatzes eingerichtet ist, kann die Genauigkeit der Bestimmung des Erntegutdurchsatzes verbessern, wodurch eine genauere Ansteuerung zur Anpassung der Weite des Erntegutdurchgangsspaltes durch die Steuerungsvorrichtung ermöglicht wird.

Gemäß einer bevorzugten Weiterbildung kann die Steuerungsvorrichtung eine Speichereinheit aufweisen, in welcher ein relativer oder absoluter Schwellwert für eine Änderung des Erntegutdurchsatzes hinterlegt ist, dessen Überschreiten die Steuerungsvorrichtung als Indikator zur Anpassung der Weite des Erntegutdurchgangsspaltes interpretiert. Ein solcher Schwellwert kann vorgesehen sein, um eine Überregelung der Spaltänderungsvorrichtung aufgrund lediglich geringfügiger Abweichungen in der Form des Schwads zu vermeiden, die sich in unerwünschter Weise auf den Gutfluss und den Überladevorgang auswirken kann.

Bevorzugt kann das Nachbeschleunigungsorgan eine Achse aufweisen, die endseitig in Führungen gelagert ist, die an Seitenwänden, die ein das Nachbeschleunigungsorgan zumindest abschnittsweise ummantelndes Gehäuse begrenzen, angeordnet sind, wobei die Spaltänderungsvorrichtung zur, insbesondere translatorischen, Bewegung des Nachbeschleunigungsorgans eine Aktorik umfasst, mittels der die Weite des Erntegutdurchgangsspaltes veränderbar ist. Denkbar ist auch eine Schwenkbewegung des Nachbeschleunigungsorgans, um die Weite des Erntegutdurchgangsspaltes zu verändern.

Dazu kann die Aktorik mechanisch, hydraulisch und/oder elektromechanisch betätigbare Antriebselemente umfassen. Als zumindest ein hydraulisch und/oder elektromechanisch betätigbares Antriebselement kann beispielsweise zumindest ein Hydraulikzylinder oder zumindest ein Linearmotor vorgesehen sein. Als mechanisch betätigbare Antriebselemente können beispielsweise zumindest eine Hebelanordnung sowie eine Welle oder eine Spindel vorgesehen sein. Das zumindest eine hydraulisch und/oder elektromechanisch betätigbare Antriebselement kann an einem ersten Anlenkpunkt an der Welle angreifen und diese um eine ortsfeste Drehachse schwenken. Die zumindest eine Hebelanordnung kann an einem zum ersten Anlenkpunkt beabstandeten zweiten Anlenkpunkt an der Welle angreifen, sodass die Bewegung des hydraulisch und/oder elektromechanisch betätigbaren Antriebselementes auf die Hebelanordnung übertragen wird. Der erste Anlenkpunkt und der zweite Anlenkpunkt können an einander gegenüberliegenden Stellen der Welle angeordnet sein. Weiterhin können zwei über ein Verbindungsglied verbundene Spindeln zum Verstellen benutzt werden.

Vorteilhaft übermittelt ein dem Nachbeschleunigungsorgan und/oder der Aktorik zugeordneter Sensor das jeweilige Stellmaß an die Steuerungsvorrichtung.

Gemäß einer bevorzugten Weiterbildung kann die Spaltänderungsvorrichtung eine Verstellcharakteristik mit einem im Wesentlichen progressiv ansteigenden Verlauf der Einstellung der Weite des Erntegutdurchgangsspaltes aufweisen. Der Vorteil einer solchen Spaltänderungsvorrichtung besteht darin, dass bei einer Einstellung kleiner Abstandswerte für die Weite des Erntegutspaltes eine sehr präzise Einstellung durch die Spaltänderungsvorrichtung ermöglicht wird, während mit der Einstellung zunehmender Abstandswerte für die Weite die Veränderung schneller durch die Ansteuerung der Spaltänderungsvorrichtung erreicht wird. Ersteres ist für trockenes Erntegut und/oder geringe Erntegutdurchsätze relevant, die beispielsweise auf eine Unregelmäßigkeit in der Form des Schwads, eine Lücke im Schwad oder das Anschneiden bzw. das Erreichen eines Vorgewendes zurückgehen können. Letzteres ist für im Wesentlichen gleichmäßige größere Erntegutdurchsätze relevant, um die Leistungsaufnahme des Nachbeschleunigungsorgans zu optimieren.

Bevorzugt kann die Spaltänderungsvorrichtung dazu eingerichtet sein, die Weite des Erntegutdurchgangsspaltes auf einen Minimalwert von 2 mm bis zu einem Maximalwert von 80 mm einzustellen. Der Minimalwert für die Weite des Erntegutdurchgangsspaltes führt, bei gegebener Antriebsdrehzahl des Nachbeschleunigungsorgans, zu einer maximalen Beschleunigung des Erntegutes. Insbesondere kann die Spaltänderungsvorrichtung dazu eingerichtet sein, die Weite des Erntegutdurchgangsspaltes stufenlos einzustellen.

Gemäß einer Weiterbildung kann in der Speichereinheit zumindest eine Kennlinie oder ein Kennlinienfeld für die einzustellende Weite des Erntegutdurchgangsspaltes in Abhängigkeit von zumindest einer Eigenschaft des Erntegutes und/oder dem Erntegutdurchsatz hinterlegt sein, wobei die Steuerungsvorrichtung eine Recheneinheit umfasst, welche die zumindest eine Kennlinie oder das zumindest eine Kennlinienfeld zur Ansteuerung der Spaltänderungsvorrichtung auswertet. Dabei bilden zumindest die von der Schwaddetektionseinrichtung bereitgestellten Daten Eingangsgrößen und die einzustellende Spaltweite bildet die Ausgangsgröße. Daten des zumindest einen Sensors, der zur Detektion von Eigenschaften des Erntegutes eingerichtet ist, und/oder der zumindest einen Sensoranordnung, mittels der auf den Erntegutdurchsatz geschlossen werden kann, können zusätzliche Eingangsgrößen bilden.

Insbesondere kann die Steuerungsvorrichtung dazu eingerichtet sein, die Spaltänderungsvorrichtung derart anzusteuern, um die Weite des Erntegutdurchgangsspaltes mit zunehmender Trockenheit des Erntegutes und/oder abnehmendem Erntegutdurchsatz zu reduzieren. Eine zunehmende Trockenheit und/oder eine Abnahme des Erntegutdurchsatzes erfordern eine Reduzierung der Weite des Erntegutdurchgangsspaltes, um ein sicheres Überladen in den Ladebehälter zu gewährleisten.

Insbesondere kann die Steuerungsvorrichtung zur automatischen Ansteuerung der Spaltänderungsvorrichtung eingerichtet sein. Dadurch kann der Bediener der Erntemaschine entlastet werden. Zudem ist durch die Automatisierung eine zeitnähere und präzisere Ansteuerung und Einstellung der Weite des Erntegutdurchgangsspaltes möglich, um den Betrieb des Nachbeschleunigungsorgans effizient zu gestalten.

Die erfindungsgemäße Aufgabe wird ferner durch ein Verfahren zum Betreiben einer selbstfahrenden landwirtschaftlichen Erntemaschine, insbesondere eines Feldhäckslers, mit zumindest einem Nachbeschleunigungsorgan zur veränderlichen Beschleunigung von Erntegut und mit einer dem Nachbeschleunigungsorgan nachgeordneten Überladeeinrichtung zum Auswerfen des Ernteguts in einen Ladebehälter, wobei zur veränderlichen Beschleunigung des Erntegutes die Weite eines Erntegutdurchgangsspaltes des Nachbeschleunigungsorgans mittels einer Spaltänderungsvorrichtung angepasst wird, wobei die Spaltänderungsvorrichtung durch von einer Steuerungsvorrichtung generierte Steuersignale angesteuert wird, gemäß dem unabhängigen Anspruch 14 gelöst.

Erfindungsgemäß ist vorgesehen, dass die Steuerungsvorrichtung von einer Schwaddetektionseinrichtung generierte Daten empfängt und auswertet, welche Eigenschaften des von der Erntemaschine in Form eines Schwads aufzunehmenden Erntegutes umfassen, und dass die Steuerungsvorrichtung in Abhängigkeit von der Auswertung der von der Schwaddetektionseinrichtung bereitgestellten Daten die Steuersignale zur Anpassung der Weite des Erntegutdurchgangsspaltes generiert. Das Verfahren zeichnet sich dadurch aus, dass das Nachbeschleunigungsorgan effizienter betrieben wird. Die Gefahr, dass Verstopfungen im Förderkanal auftreten, kann vermieden oder zumindest reduziert werden. Damit einher geht die Vermeidung von Stillstandszeiten, die für das Beseitigen solcher Verstopfungen aufzuwenden sind. Auf die erfindungsgemäßen Vorteile der landwirtschaftlichen Erntemaschine darf verwiesen werden.

Die vorliegende Erfindung wird nachstehend anhand eines in den Zeichnungen dargestellten Ausführungsbeispieles näher erläutert.

Das vor allem schnelle Einstellen großer Abstandswerte für die Weite des Erntegutdurchgangsspaltes 14 ist relevant, um auf eine sprunghafte Zunahme der Erntegutdurchsätze, wie sie nach kurz dem Einfahren in den Bestand auftreten, reagieren zu können sowie um den Energieverbrauch zu optimieren.

Es zeigen:
- Fig. 1: eine schematische Darstellung einer als selbstfahrender Feldhäcksler ausgeführten landwirtschaftlichen Erntemaschine in Seitenansicht;
- Fig. 2: eine schematische Darstellung der Erntemaschine gemäß Fig. 1 mit einem als Pick-up ausgeführten Vorsatzgerät zur Aufnahme eines Schwads;
- Fig. 3: eine schematische Ansicht auf eine Erntesituation der Erntemaschine gemäß Fig. 2 von oben;
- Fig. 4: schematisch und exemplarisch eine Seitenansicht eines Nachbeschleunigungsorgans der Erntemaschine in einer Position mit minimaler Weite eines Erntegutdurchgangsspaltes; und
- Fig. 5: schematisch und exemplarisch eine Seitenansicht des Nachbeschleunigungsorgans gemäß Fig. 4 in einer Position mit maximaler Weite des Erntegutdurchgangsspaltes.

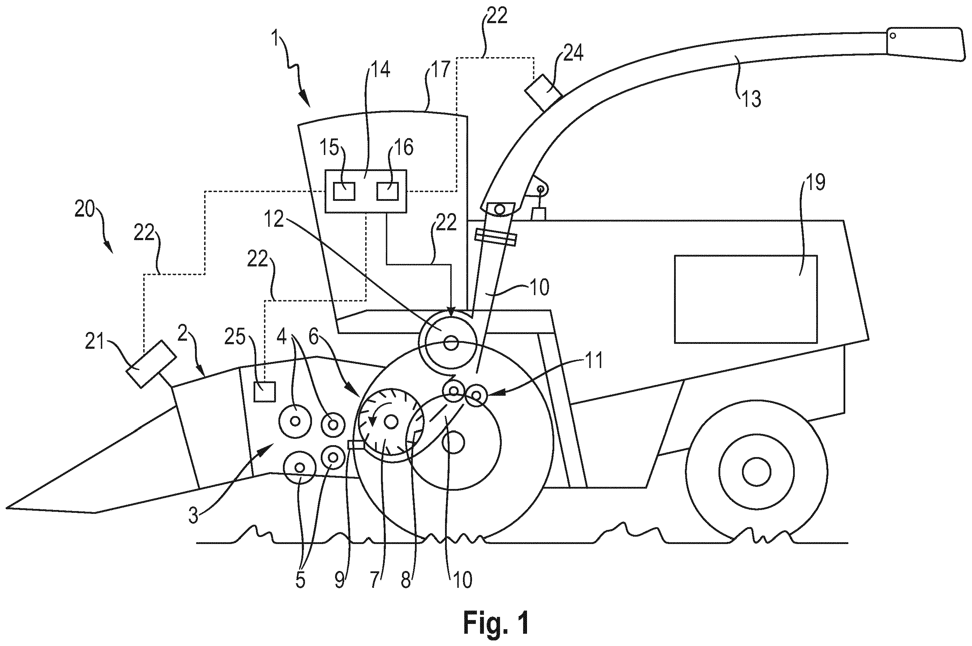

In Fig. 1 ist eine als Feldhäcksler ausgeführte selbstfahrende landwirtschaftliche Erntemaschine 1 abgebildet, an welcher im frontseitigen Bereich zur Aufnahme von auf dem Boden abgelegten Erntegut ein Vorsatzgerät 2 angeordnet ist. Das Vorsatzgerät 2 variiert in Abhängigkeit von der zu erntenden bzw. aufzunehmenden Erntegutart. Das Vorsatzgerät 2 nimmt das Erntegut vom Feld auf und fördert es einem Einzugsorgan 3 zu, die im dargestellten Ausführungsbeispiel aus einer Walzengruppe mit oberen und unteren Einzugswalzen 4, 5 besteht. Die Einzugswalzen 4, 5 des Einzugsorgans 3 üben eine Presskraft auf das aufgenommene Erntegut aus. Das Einzugsorgan 3 fördert das zu einer Erntegutmatte verdichtete Erntegut einer Häckselvorrichtung 6 zu, welche eine rotierend angetriebene Häckseltrommel 7 mit über deren Umfang verteilt angeordneten Häckselmessern 8 aufweist. Die Häckselmesser 8 schneiden die von dem Einzugsorgan 3 zugeführte Erntegutmatte an einer Gegenschneide 9. Das geschnittene bzw. gehäckselte Erntegut gelangt durch die Rotationsbewegung der Häckseltrommel 7 in einen nachgeordneten Förderkanal 10, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten, rotierend angetriebenen Nachbeschleunigungsorgan 12 zusätzlich beschleunigt durch eine verstellbare Überladeeinrichtung 13 in ein mitgeführtes Transportfahrzeug gefördert wird. Die optionale Nachbearbeitungsvorrichtung 11 kann wahlweise aus dem Gutflussweg ausgeschwenkt oder vollständig entfernt werden. Die Überladeeinrichtung 13 ist um eine vertikal verlaufende Achse drehbar, beispielsweise mittels eines Drehkranzes. Zusätzlich und unabhängig davon ist die Überladeeinrichtung 13 um eine horizontal verlaufende Achse schwenkbar. Am freien Ende der Überladeeinrichtung 13 kann eine sogenannte Auswurfklappe angeordnet sein, welche gegenüber der Überladeeinrichtung 13 um eine horizontal verlaufende Achse schwenkbar ist.

Zum Antreiben der Arbeitsaggregate der Erntemaschine 1, d.h. von Vorsatzgerät 2, Einzugsorgan 3, Häckselvorrichtung 6, optional der Nachbearbeitungsvorrichtung 11, sowie dem Nachbeschleunigungsorgan 12, ist ein Antriebsmotor 19 vorgesehen. Die Arbeitsaggregate können durch einen - nicht dargestellten - Hauptantriebsstrang, mit der Motorabtriebswelle des Antriebsmotors 19 verbunden sein. Der Antriebsmotor 19 dient auch zum Betreiben eines hydrodynamischen Fahrantriebs des Feldhäckslers 1.

Die Erntemaschine 1 umfasst eine Fahrerkabine 17, in der eine Eingabe-Ausgabe-Einheit 18 angeordnet ist. Weiterhin umfasst die Erntemaschine 1 eine Steuerungsvorrichtung 14, welche eine Speichereinheit 15 zum Hinterlegen von Daten und eine Recheneinheit 16 zur Verarbeitung der in dem Speichereinheit 15 hinterlegten Daten umfasst. Die Steuerungsvorrichtung 14 ist dazu eingerichtet, einen Bediener der Erntemaschine 1 bei der Bedienung derselben zu unterstützen. Die Steuerungsvorrichtung 14 ist dabei zur Ansteuerung zumindest des Nachbeschleunigungsorgans 12 eingerichtet.

An der Erntemaschine 1 ist eine Schwaddetektionseinrichtung 20 angeordnet. Die Schwaddetektionseinrichtung 20 ist mit zumindest einem optischen Sensor 21 zur Erkennung eines Vorfeldbereiches, d.h. eines in Fahrtrichtung vor der Erntemaschine 1 liegenden Abschnitts, ausgestattet. Der zumindest eine optische Sensor 21 ist dazu eingerichtet, das Vorhandensein und/oder eine Form eines Schwads 23 vor der Erntemaschine 1 zu erkennen. Die Schwaddetektionseinrichtung 20 überträgt durch den zumindest einen optischen Sensor 21 bestimmte Daten an die Steuerungsvorrichtung 14 zur Auswertung. Hierzu ist der zumindest eine optische Sensor 21 mittels eines Bussystems 22 der Erntemaschine 1 mit der Steuerungsvorrichtung 14 verbunden. Der zumindest eine optische Sensor 21 kann als Kamera, RGB-Kamera, 3D-Kamera oder LIDAR ausgeführt sein.

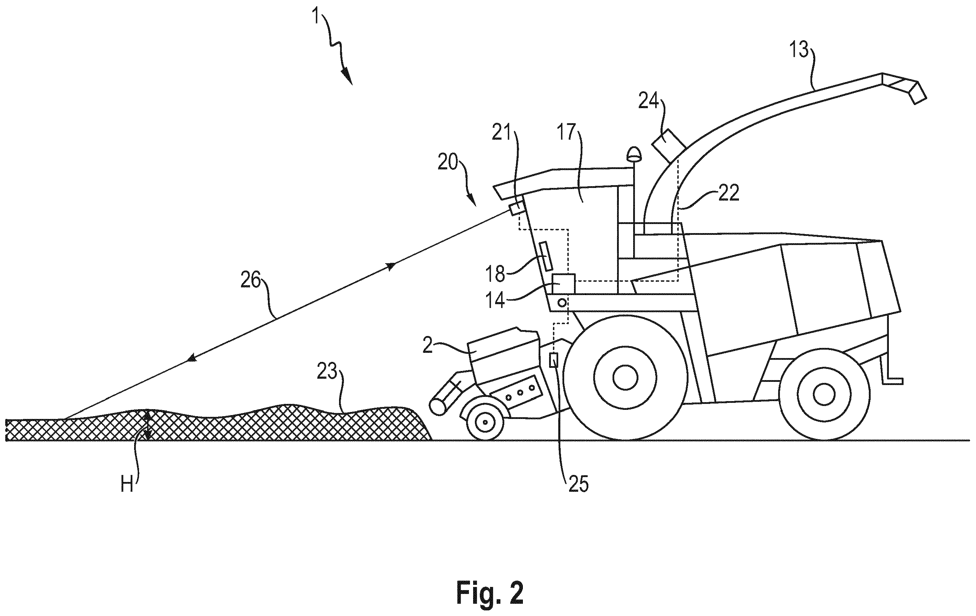

Die Darstellung in Fig. 1 zeigt eine beispielhafte Anordnung des zumindest einen optischen Sensors 21 unmittelbar am Vorsatzgerät 2. In Fig. 2 ist eine vorteilhafte Anordnung an der Fahrerkabine 17 dargestellt.

Des Weiteren kann die Schwaddetektionseinrichtung 20 mit zumindest einem entlang des Erntegutstroms angeordneten Sensor 24 ausgestattet sein, welcher Eigenschaften des aufgenommenen Erntegutes detektiert. Die Schwaddetektionseinrichtung 20 überträgt diese Daten ebenfalls an die Steuerungsvorrichtung 14 zur Auswertung. Bei dem zumindest einen einem entlang des Erntegutstroms angeordneten Sensor 24 kann es sich bevorzugt um einen NIR-Sensor und/oder einen Feuchtigkeitssensor handeln Die Anordnung des zumindest einen Sensors 24 entlang des Erntegutstroms kann an beliebiger Stelle innerhalb der Erntemaschine 1 erfolgen. Eine bevorzugte Anordnung des zumindest einen Sensors 24 kann an der Überladeeinrichtung 13 vorgesehen sein. Während ein Feuchtigkeitssensor lediglich die Feuchtigkeit des Erntegutes detektiert, detektiert ein NIR-Sensor darüberhinausgehende Informationen von Eigenschaften des Erntegutes.

Weiterhin kann die Schwaddetektionseinrichtung 20 mit zumindest einer Sensoranordnung 25 ausgeführt sein, welche zur Detektion einer Schichthöhe in dem Einzugsorgan 3 eingerichtet ist. Mittels der Sensoranordnung 25 lässt sich das Vorhandensein von Erntegut und der Durchsatz an aufgenommenem Erntegut bestimmen.

In Fig. 2 ist eine schematische Darstellung der Erntemaschine 1 gemäß Fig. 1 mit einem als Pick-up ausgeführten Vorsatzgerät 2 zur Aufnahme des Schwads 23 dargestellt. Der zumindest eine an der Fahrerkabine 17 angeordnete Sensor 21 detektiert mittels Abtaststrahlen 26 das Vorhandensein des Schwads 23 ebenso wie dessen Geometrie respektive Form, mit welcher der Schwad 23 in einem vorangehenden Prozess auf dem Boden abgelegt wurde. Wie aus der Darstellung in Fig. 2 ersichtlich ist, weist der Schwad 23 in der Regel eine unregelmäßige Höhenkontur H auf. Die Höhenkontur H verändert sich entlang des Schwads 23 unter anderem in Abhängigkeit von der Bestandsdichte des zuvor abgeernteten Erntegutes. Weitere Einflüsse können sich aus dem vorangehenden Prozess der Ausbildung des Schwads 23 ergeben.

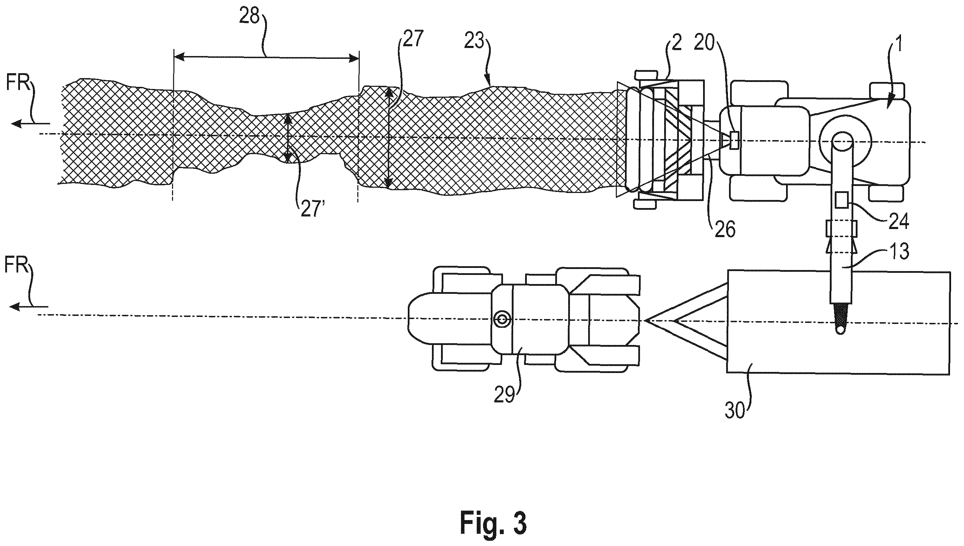

Die Darstellung in Fig. 3 zeigt eine schematische Ansicht auf eine Erntesituation der Erntemaschine gemäß Fig. 2 von oben. Die Erntemaschine 1 wird von einem Zugfahrzeug 29 und einem daran angehängten Ladebehälter 30 begleitet, welche zum Überladen in Abhängigkeit von der Erntesituation in einer Fahrspur im Wesentlichen parallel zur Erntemaschine 1 oder in der Fahrspur hinter der Erntemaschine 1 fahren.

Der Schwad 23 weist nicht nur eine unregelmäßige Höhenkontur H auf, sondern variiert in unterschiedlichem Maße auch in seiner Breite 27. Mit 28 ist ein Abschnitt entlang des aufzunehmenden Schwads 23 bezeichnet, welcher aufgrund einer geringeren Bestandsdichte an Erntegut eine geringere Breite 27' aufweist als der vorangehende Abschnitt bzw. ein nachfolgender Abschnitt.

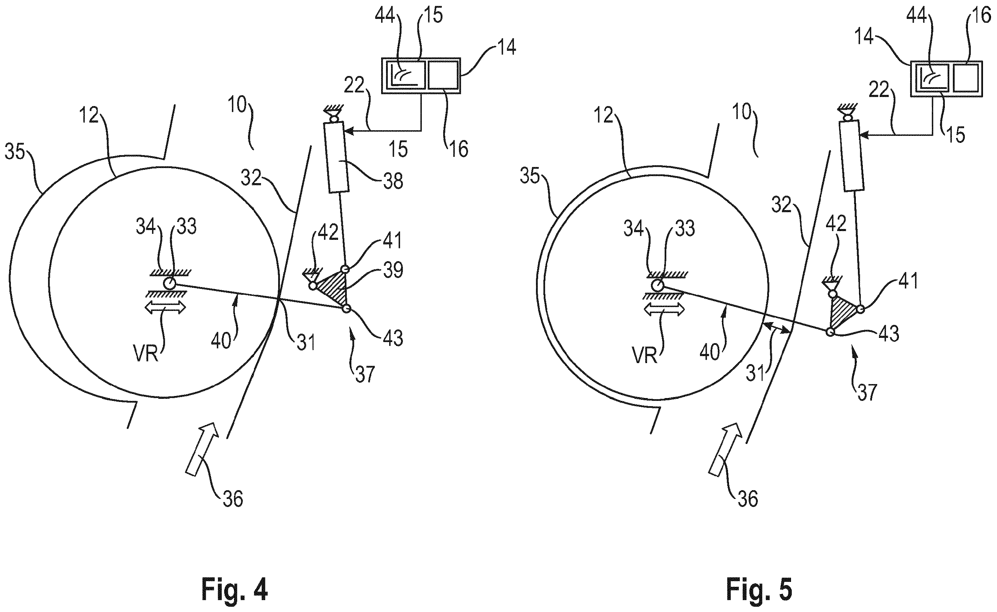

In Fig. 4 ist schematisch und exemplarisch eine Seitenansicht des Nachbeschleunigungsorgans 12 der Erntemaschine 1 in einer Position mit minimaler Weite eines Erntegutdurchgangsspaltes 31 dargestellt. In Fig. 4 beträgt die minimal einstellbare Weite des einstellbaren Erntegutdurchgangsspaltes 31 etwa 2 mm.

Die Darstellung in Fig. 5 zeigt schematisch und exemplarisch eine Seitenansicht des Nachbeschleunigungsorgans 12 gemäß Fig. 4 in einer Position mit maximaler Weite des Erntegutdurchgangsspaltes 31. In Fig. 5 beträgt die maximal einstellbare Weite des einstellbaren Erntegutdurchgangsspaltes 31 etwa 80 mm.

Die Weite des einstellbaren Erntegutdurchgangsspaltes 31 des rotierend angetriebenen Nachbeschleunigungsorgans 12 bezeichnet den Abstand zwischen dem Nachbeschleunigungsorgan 12 respektive dessen Hüllkreis und einer diesem gegenüberliegenden Wandung 32 des Förderkanals 10 der Erntemaschine 1

Das Nachbeschleunigungsorgan 12 weist eine Drehachse 33 auf, die endseitig in Führungen 34 verschiebbar gelagert ist, wie durch den Pfeil VR veranschaulicht. Die Führungen 33 sind an Seitenwänden, die ein das Nachbeschleunigungsorgan 12 zumindest abschnittsweise ummantelndes Gehäuse 35 begrenzen, angeordnet. Die Seitenwände können Teil des Gehäuses 35 sein.

Zur veränderlichen Beschleunigung des entlang des Förderkanals 10 geförderten Erntegutes (Pfeil 36) ist die Weite des Erntegutdurchgangsspaltes 31 des Nachbeschleunigungsorgans 12 mittels einer Spaltänderungsvorrichtung 37 anpassbar. Der Spaltänderungsvorrichtung 37 ist die Steuerungsvorrichtung 14 zugeordnet, die zur Ansteuerung der Spaltänderungsvorrichtung 37 durch von der Steuerungsvorrichtung 14 generierte Steuersignale eingerichtet ist.

Die Spaltänderungsvorrichtung 37 umfasst gemäß der dargestellten Ausführungsform zur, insbesondere translatorischen, Bewegung (Pfeil VR) des Nachbeschleunigungsorgans 12 eine Aktorik, mittels der die Weite des Erntegutdurchgangsspaltes 31 veränderbar ist. Durch die Änderung der Weite des Erntegutdurchgangsspaltes 31 wird auf unterschiedliche Betriebssituationen reagiert, in welchen eine unterschiedliche Beschleunigung des Erntegutes durch das Nachbeschleunigungsorgan 12 erforderlich ist.

Die Aktorik der Spaltänderungsvorrichtung 37 umfasst mechanisch, hydraulisch und/oder elektromechanisch betätigbare Antriebselemente 38, 39, 40. Im dargestellten Ausführungsbeispiel umfasst die Spaltänderungsvorrichtung 37 zumindest einen Hydraulikzylinder 38, eine Welle 39 sowie zumindest eine Hebelanordnung 40 als Antriebselemente. Alternativ kann anstelle der Welle 39 eine Spindel vorgesehen sein. Denkbar ist weiterhin, dass zwei über ein Verbindungsglied verbundene Spindeln zum Verstellen benutzt werden.

Das zumindest eine hydraulisch und/oder elektromechanisch betätigbare Antriebselement, hier und vorzugsweise der zumindest eine Hydraulikzylinder 38, kann an einem ersten Anlenkpunkt 41 an der Welle 39 angreifen und diese um eine ortsfeste Drehachse 42 schwenken. Die Hebelanordnung 40 greift an einem zum ersten Anlenkpunkt 41 beabstandeten zweiten Anlenkpunkt 43 an der Welle 39 an, sodass die Bewegung des zumindest einen Hydraulikzylinders 38 auf die zumindest eine Hebelanordnung 40 übertragen wird. Der erste Anlenkpunkt 41 und der zweite Anlenkpunkt 43 können an einander gegenüberliegenden Stellen der Welle 39 angeordnet sein. Bevorzugt sind zwei zueinander beabstandet angeordnete hydraulisch und/oder elektromechanisch betätigbare Antriebselemente, hier und vorzugsweise zwei Hydraulikzylinder 38, vorgesehen, welche in Endbereichen der Welle 39 an dieser angreifen. Das Vorsehen zweier hydraulisch und/oder elektromechanisch betätigbarer Antriebselemente ermöglicht eine gleichmäßigere Verstellung der Welle 39.

Das Einfahren der Kolbenstange des zumindest einen Hydraulikzylinders 38 bewirkt ein Drehen bzw. Schwenken der Welle 39 gegen den Uhrzeigersinn, wodurch die Drehachse 33 des Nachbeschleunigungsorgan 12 in Richtung der Wandung 32 des Förderkanals 10 bewegt wird, bis die minimal einstellbare Weite des Erntegutdurchgangsspaltes 31 erreicht ist, wie in Fig. 4 dargestellt.

Das Ausfahren der Kolbenstange des Hydraulikzylinders 38 bewirkt ein Drehen bzw. Schwenken der Welle 39 im Uhrzeigersinn, wodurch die Drehachse 33 des Nachbeschleunigungsorgans 12 zur Wandung 32 zunehmend beabstandet wird, bis die maximal einstellbare Weite des Erntegutdurchgangsspaltes 31 erreicht ist, wie in Fig. 5 dargestellt.

Wesentlich ist, dass die Spaltänderungsvorrichtung 37 eine Verstellcharakteristik mit einem im Wesentlichen progressiv ansteigenden Verlauf der Einstellung der Weite des Erntegutdurchgangsspaltes 31 aufweist. Der Vorteil einer derart ausgeführten Spaltänderungsvorrichtung 37 besteht darin, dass bei einer Einstellung kleiner Abstandswerte, insbesondere kleiner oder gleich 30 mm, für die Weite des Erntegutspaltes 31 eine sehr präzise Einstellung durch die Spaltänderungsvorrichtung 37 ermöglicht wird, während mit der Einstellung zunehmender Abstandswerte, insbesondere größer 30 mm, für die Weite die Veränderung schneller durch die Ansteuerung der Spaltänderungsvorrichtung 37 erreicht wird. Dabei ist eine präzise Einstellung kleiner Abstandswerte für die Weite des Erntegutdurchgangsspaltes 31 für trockenes Erntegut und/oder für geringe Erntegutdurchsätze relevant. Die präzise Einstellung kleiner Abstandswerte für die Weite des Erntegutdurchgangsspaltes 31 ermöglicht bei trockenem Erntegut und/oder geringem Erntegutdurchsatz eine optimale Beschleunigung und einen energieeffizienteren Betrieb des Nachbeschleunigungsorgans 12. Das vor allem schnelle Einstellen großer Abstandswerte für die Weite des Erntegutdurchgangsspaltes 31 ist relevant, um auf eine sprunghafte Zunahme der Erntegutdurchsätze, wie sie nach kurz dem Einfahren in den Bestand auftreten, reagieren zu können sowie um den Energieverbrauch zu optimieren.

In der Speichereinheit 15 kann zumindest eine Kennlinie 44 oder ein Kennlinienfeld für die einzustellende Weite des Erntegutdurchgangsspaltes 31 in Abhängigkeit von zumindest einer Eigenschaft des Erntegutes und dem Erntegutdurchsatz hinterlegt sein. Die Recheneinheit 16 der Steuerungsvorrichtung 14 kann die zumindest eine Kennlinie 44 oder das zumindest eine Kennlinienfeld zur Ansteuerung der Spaltänderungsvorrichtung 37 auswerten.

Weiterhin kann in der Speichereinheit 15 ein relativer oder absoluter Schwellwert für eine Änderung des Erntegutdurchsatzes hinterlegt sein, dessen Überschreiten die Steuerungsvorrichtung 14 als Indikator zur Anpassung der Weite des Erntegutdurchgangsspaltes 31 interpretiert. Ein solcher Schwellwert kann vorgesehen sein, um eine Überregelung der Spaltänderungsvorrichtung 37 zu vermeiden. Somit kann vermieden werden, dass aufgrund lediglich geringfügiger Abweichungen in der Form des Schwads und einer damit verbundenen Änderung des Erntegutdurchsatzes die Spaltänderungsvorrichtung 37 angesteuert wird, um auf diese Änderung zu reagieren.

Die Steuerungsvorrichtung 14 ist dazu eingerichtet, die Spaltänderungsvorrichtung 37 derart anzusteuern, um die Weite des Erntegutdurchgangsspaltes 31 mit zunehmender Trockenheit des Erntegutes und/oder abnehmendem Erntegutdurchsatz zu reduzieren. Eine zunehmende Trockenheit und/oder eine Abnahme des Erntegutdurchsatzes erfordern eine Reduzierung der Weite des Erntegutdurchgangsspaltes 31, um ein sicheres Überladen in den Ladebehälter 30 zu gewährleisten.

Bevorzugt ist die Steuerungsvorrichtung 14 zur automatischen Ansteuerung der Spaltänderungsvorrichtung 37 eingerichtet. In Verbindung mit den Daten, die durch die Schwaddetektionseinrichtung 20 generiert werden, lässt sich die Spaltänderungsvorrichtung 37 automatisch ansteuern, um das Nachbeschleunigungsorgan 12 effizient zu betreiben. Die einen im Wesentlichen progressiv ansteigenden Verlauf aufweisende Verstellcharakteristik der Spaltänderungsvorrichtung 37 ermöglicht dabei eine verbesserte Anpassung an unterschiedliche Erntebedingungen und/oder Ernteguteigenschaften. Eine feinfühligere und präzise Einstellung geringer Abstandswerte für die Weite des Erntegutdurchgangsspaltes 31 bei geringem Erntegutdurchsatz und/oder trockenem Erntegut steht einer zunehmend schnelleren Einstellung von Abstandswerte für die Weite des Erntegutdurchgangsspaltes 31 gegenüber, wenn der Erntegutdurchsatz überproportional ansteigt. Ein überproportionaler Anstieg tritt zum Beispiel nach dem Anschneiden oder dem Wiedereinfahren in den Bestand nach dem Durchfahren eines Vorgewendes auf.

### Bezugszeichenliste

| | | | |
|---|---|---|---|
| 1 | Erntemaschine | 33 | Drehachse |
| 2 | Vorsatzgerät | 34 | Führung |
| 3 | Einzugsorgan | 35 | Gehäuse |
| 4 | Obere Einzugswalzen | 36 | Erntegut |
| 5 | Untere Einzugswalzen | 37 | Spaltänderungsvorrichtung |
| 6 | Häckselvorrichtung | 38 | Antriebselement/Hydraulikzylinder |
| 7 | Häckseltrommel | 39 | Antriebselement/Welle |
| 8 | Häckselmesser | 40 | Antriebselement/Hebelanordnung |
| 9 | Gegenschneide | 41 | Erster Anlenkpunkt |
| 10 | Förderkanal | 42 | Ortsfeste Drehachse |
| 11 | Nachbearbeitungsvorrichtung | 43 | Zweiter Anlenkpunkt |
| 12 | Nachbeschleunigungsorgan | 44 | Kennlinie |
| 13 | Überladeeinrichtung | | |
| 14 | Steuerungsvorrichtung | FR | Fahrtrichtung |
| 15 | Speichereinheit | H | Höhenkontur |
| 16 | Recheneinheit | VR | Bewegung (Pfeil) |
| 17 | Fahrerkabine | | |
| 18 | Eingabe-Ausgabe-Einheit | | |
| 19 | Antriebsmotor | | |
| 20 | Schwaddetektionseinrichtung | | |
| 21 | Sensor | | |
| 22 | Bussystem | | |
| 23 | Schwad | | |
| 24 | Sensor | | |
| 25 | Sensoranordnung | | |
| 26 | Abtaststrahlen | | |
| 27 | Breite | | |
| 27' | Breite | | |
| 28 | Abschnitt | | |
| 29 | Zugfahrzeug | | |
| 30 | Ladebehälter | | |
| 31 | Erntegutdurchgangsspalt | | |
| 32 | Wandung | | |

## Patentansprüche

1. Selbstfahrende landwirtschaftliche Erntemaschine (1), insbesondere Feldhäcksler, mit zumindest einem Nachbeschleunigungsorgan (12) zur veränderlichen Beschleunigung von Erntegut und mit einer dem Nachbeschleunigungsorgan (12) nachgeordneten Überladeeinrichtung (13) zum Auswerfen des Ernteguts in einen Ladebehälter (30), wobei zur veränderlichen Beschleunigung des Erntegutes die Weite eines Erntegutdurchgangsspaltes (31) des Nachbeschleunigungsorgans (12) mittels einer Spaltänderungsvorrichtung (37) anpassbar ist, wobei der Spaltänderungsvorrichtung (37) eine Steuerungsvorrichtung (14) zugeordnet ist, die mittels eines generierten Steuersignals die Spaltänderungsvorrichtung (37) ansteuert, **dadurch gekennzeichnet, dass** die Steuerungsvorrichtung (14) dazu eingerichtet ist, von einer an der Erntemaschine (1) angeordneten Schwaddetektionseinrichtung (20) generierte Daten zu empfangen und auszuwerten, welche Eigenschaften des von der Erntemaschine (1) in Form eines Schwads (23) aufzunehmenden Erntegutes umfassen, und in Abhängigkeit von der Auswertung der Daten der Schwaddetektionseinrichtung (20) die Steuersignale zur Anpassung der Weite des Erntegutdurchgangsspaltes (31) zu generieren.

2. Selbstfahrende Erntemaschine (1) nach Anspruch 1, **dadurch gekennzeichnet, dass** die Schwaddetektionseinrichtung (20) mit zumindest einem optischen Sensor (21) zur Erkennung eines Vorfeldbereiches ausgestattet ist, wobei der zumindest eine Sensor (21) das Vorhandensein und/oder eine Form des Schwads (23) vor der Erntemaschine (1) erkennt und dass die Schwaddetektionseinrichtung (20) diese Daten an die Steuerungsvorrichtung (14) überträgt.

3. Selbstfahrende Erntemaschine (1) nach Anspruch 2, **dadurch gekennzeichnet, dass** die Steuerungsvorrichtung (14) dazu eingerichtet ist, anhand der Form des Schwads (23) auf eine Erntegutdurchsatzmenge zu schließen.

4. Selbstfahrende Erntemaschine (1) nach einem der Ansprüche 1 bis 3, **dadurch gekennzeichnet, dass** die Schwaddetektionseinrichtung (20) mit zumindest einem entlang des Erntegutstroms angeordneten Sensor (24) ausgestattet ist, welcher Eigenschaften des Erntegutes detektiert und dass die Schwaddetektionseinrichtung (20) diese Daten an die Steuerungsvorrichtung (14) überträgt.

5. Selbstfahrende Erntemaschine (1) nach einem der Ansprüche 1 bis 4, **dadurch gekennzeichnet, dass** die Schwaddetektionseinrichtung (20) mit zumindest einer Sensoranordnung (25) ausgeführt ist, die zur Detektion einer Schichthöhe in dem Einzugsorgan (3) eingerichtet ist, und dass die Schwaddetektionseinrichtung (20) die von der zumindest einen Sensoranordnung (25) bestimmten Daten an die Steuerungsvorrichtung (14) zur Bestimmung eines Erntegutdurchsatzes überträgt.

6. Selbstfahrende Erntemaschine (1) nach einem der Ansprüche 3 bis 5, **dadurch gekennzeichnet, dass** die Steuerungsvorrichtung (14) eine Speichereinheit (15) aufweist, in welcher ein relativer oder absoluter Schwellwert für eine Änderung des Erntegutdurchsatzes hinterlegt ist, dessen Überschreiten die Steuerungsvorrichtung (14) als Indikator zur Anpassung der Weite des Erntegutdurchgangsspaltes (31) interpretiert.

7. Selbstfahrende Erntemaschine (1) nach einem der vorangehenden Ansprüche, **dadurch gekennzeichnet, dass** das Nachbeschleunigungsorgan (12) eine Drehachse (33) aufweist, die endseitig in Führungen (34) gelagert ist, die an Seitenwänden, die ein das Nachbeschleunigungsorgan (12) zumindest abschnittsweise ummantelndes Gehäuse (35) begrenzen, angeordnet sind, und dass die Spaltänderungsvorrichtung (37) zur, insbesondere translatorischen, Bewegung (VR) des Nachbeschleunigungsorgans (12) eine Aktorik umfasst, mittels der die Weite des Erntegutdurchgangsspaltes (31) veränderbar ist.

8. Selbstfahrende Erntemaschine (1) nach Anspruch 7, **dadurch gekennzeichnet, dass** die Aktorik mechanisch, hydraulisch und/oder elektromechanisch betätigbare Antriebselemente (38, 39, 40) umfasst.

9. Selbstfahrende Erntemaschine (1) nach einem der vorangehenden Ansprüche, **dadurch gekennzeichnet, dass** die Spaltänderungsvorrichtung (37) eine Verstellcharakteristik mit einem im Wesentlichen progressiv ansteigenden Verlauf der Einstellung der Weite des Erntegutdurchgangsspaltes (31) aufweist.

10. Selbstfahrende Erntemaschine (1) nach einem der vorangehenden Ansprüche, **dadurch gekennzeichnet, dass** die Spaltänderungsvorrichtung (37) dazu eingerichtet ist, die Weite des Erntegutdurchgangsspaltes (31) auf einen Minimalwert von 2 mm bis zu einem Maximalwert von 80 mm einzustellen.

11. Selbstfahrende Erntemaschine (1) nach einem der Ansprüche 6 bis 10, **dadurch gekennzeichnet, dass** in der Speichereinheit (15) zumindest eine Kennlinie (44) oder ein Kennlinienfeld für die einzustellende Weite des Erntegutdurchgangsspaltes (31) in Abhängigkeit von zumindest einer Eigenschaft des Erntegutes und/oder dem Erntegutdurchsatz hinterlegt ist und dass die Steuerungsvorrichtung (14) eine Recheneinheit (16) umfasst, welche die zumindest eine Kennlinie (44) oder das zumindest eine Kennlinienfeld zur Ansteuerung der Spaltänderungsvorrichtung (37) auswertet.

12. Selbstfahrende Erntemaschine (1) nach einem der vorangehenden Ansprüche, **dadurch gekennzeichnet, dass** die Steuerungsvorrichtung (14) dazu eingerichtet ist, die Spaltänderungsvorrichtung (37) derart anzusteuern, um die Weite des Erntegutdurchgangsspaltes (31) mit zunehmender Trockenheit des Erntegutes und/oder abnehmendem Erntegutdurchsatz zu reduzieren.

13. Selbstfahrende Erntemaschine (1) nach einem der vorangehenden Ansprüche, **dadurch gekennzeichnet, dass** die Steuerungsvorrichtung (14) zur automatischen Ansteuerung der Spaltänderungsvorrichtung (37) eingerichtet ist.

14. Verfahren zum Betreiben einer selbstfahrenden landwirtschaftlichen Erntemaschine (1), insbesondere eines Feldhäckslers, mit zumindest einem Nachbeschleunigungsorgan (12) zur veränderlichen Beschleunigung von Erntegut und mit einer dem Nachbeschleunigungsorgan (12) nachgeordneten Überladeeinrichtung (13) zum Auswerfen des Ernteguts in einen Ladebehälter (30), wobei zur veränderlichen Beschleunigung des Erntegutes die Weite eines Erntegutdurchgangsspaltes (31) des Nachbeschleunigungsorgans (12) mittels einer Spaltänderungsvorrichtung (37) angepasst wird, wobei die Spaltänderungsvorrichtung (37) durch von einer Steuerungsvorrichtung (14) generierte Steuersignale angesteuert wird, **dadurch gekennzeichnet, dass** die Steuerungsvorrichtung (14) von einer Schwaddetektionseinrichtung (20) generierte Daten empfängt und auswertet, welche Eigenschaften des von der Erntemaschine (1) in Form eines Schwads (23) aufzunehmenden Erntegutes umfassen, und dass die Steuerungsvorrichtung (14) in Abhängigkeit von der Auswertung der von der Schwaddetektionseinrichtung (20) bereitgestellten Daten die Steuersignale zur Anpassung der Weite des Erntegutdurchgangsspaltes (31) generiert.

## Claims

1. A self-propelled agricultural harvesting machine (1), in particular a forage harvester, with at least one post-acceleration unit (12) for the variable acceleration of harvested material and with a transloading device (13) disposed downstream of the post-acceleration unit (12) for ejecting the harvested material into a loading container (30), wherein, for the variable acceleration of the harvested material, the width of a harvested material transit gap (31) of the post-acceleration unit (12) can be adjusted by means of a gap variation device (37), wherein the gap variation device (37) is associated with a control unit (14) which controls the gap variation device (37) by means of a generated control signal, **characterized in that** the control device (14) is configured to receive and evaluate data, which comprise properties of the harvested material to be picked up by the harvesting machine (1) in the form of a swath (23), generated by a swath detection device (20) disposed on the harvesting machine (1) and to generate the control signals for adjusting the width of the harvested material transit gap (31) as a function of the evaluation of the data from the swath detection device (20).

2. The self-propelled harvesting machine (1) according to claim 1, **characterized in that** the swath detection device (20) is equipped with at least one optical sensor (21) for detecting a frontal field region, wherein the at least one sensor (21) detects the presence of and/or a shape of the swath (23) in front of the harvesting machine (1) and **in that** the swath detection device (20) transmits these data to the control device (14).

3. The self-propelled harvesting machine (1) according to claim 2, **characterized in that** the control device (14) is configured to deduce a harvested material throughput quantity with the aid of the shape of the swath (23).

4. The self-propelled harvesting machine (1) according to one of claims 1 to 3, **characterized in that** the swath detection device (20) is equipped with at least one sensor (24) which detects properties of the harvested material, disposed alongside the flow of harvested material, and **in that** the swath detection device (20) transmits these data to the control device (14).

5. The self-propelled harvesting machine (1) according to one of claims 1 to 4, **characterized in that** the swath detection device (20) is constructed with at least one sensor assembly (25) which is configured for detecting a layer height in the intake unit (3), and **in that** the swath detection device (20) transmits the data specified by the at least one sensor assembly (25) to the control device (14) in order to determine a harvested material throughput.

6. The self-propelled harvesting machine (1) according to one of claims 3 to 5, **characterized in that** the control device (14) has a storage unit (15) in which a relative or absolute threshold value for a variation in the harvested material throughput is stored, the crossing of which the control device (14) interprets as an indicator for the adjustment of the width of the harvested material transit gap (31).

7. The self-propelled harvesting machine (1) according to one of the preceding claims, **characterized in that** the post-acceleration unit (12) has an axis of rotation (33) which is mounted at the ends in guides (34) which are disposed on side walls which delimit a housing (35) which at least partially encases the post-acceleration unit (12), and **in that** the gap variation device (37) comprises an actuating system for movement (VR), in particular translatory movement, of the post-acceleration unit (12), by means of which the width of the harvested material transit gap (31) can be varied.

8. The self-propelled harvesting machine (1) according to claim 7, **characterized in that** the actuating system comprises mechanically, hydraulically and/or electromechanically actuatable drive elements (38, 39, 40).

9. The self-propelled harvesting machine (1) according to one of the preceding claims, **characterized in that** the gap variation device (37) has an adjustment characteristic with a substantially progressively rising profile for the adjustment of the width of the harvested material transit gap (31).

10. The self-propelled harvesting machine (1) according to one of the preceding claims, **characterized in that** the gap variation device (37) is configured to adjust the width of the harvested material transit gap (31) to a minimum value of 2 mm up to a maximum value of 80 mm.

11. The self-propelled harvesting machine (1) according to one of claims 6 to 10, **characterized in that** at least one characteristic (44) or a family of characteristics for the width of the harvested material transit gap (31) to be adjusted is stored in the storage unit (15) as a function of at least one property of the harvested material and/or of the harvested material throughput and **in that** the control device (14) comprises a computing unit (16) which evaluates the at least one characteristic (44) or the at least one family of characteristics in order to control the gap variation device (37).

12. The self-propelled harvesting machine (1) according to one of the preceding claims, **characterized in that** the control device (14) is configured to control the gap variation device (37) in a manner such as to reduce the width of the harvested material transit gap (31) with increasing dryness of the harvested material and/or with decreasing harvested material throughput.

13. The self-propelled harvesting machine (1) according to one of the preceding claims, **characterized in that** the control device (14) is configured for controlling the gap variation device (37) automatically.

14. A method for operating a self-propelled agricultural harvesting machine (1), in particular a forage harvester, with at least one post-acceleration unit (12) for the variable acceleration of harvested material and with a transloading device (13) disposed downstream of the post-acceleration unit (12) for ejecting the harvested material into a loading container (30), wherein, for the variable acceleration of the harvested material, the width of a harvested material transit gap (31) of the post-acceleration unit (12) is adjusted by means of a gap variation device (37), wherein the gap variation device (37) is controlled by control signals generated by a control unit (14), **characterized in that** the control device (14) receives and evaluates data generated by a swath detection device (20), which data comprise properties of the harvested material to be picked up by the harvesting machine (1) in the form of a swath (23), and **in that** the control device (14) generates the control signals for adjusting the width of the harvested material transit gap (31) as a function of the evaluation of the data provided from the swath detection device (20).

## Revendications

1. Machine de récolte agricole (1) automotrice, en particulier ramasseuse-hacheuse, comprenant au moins un organe distributeur-accélérateur (12), destiné à l'accélération variable de la récolte, et comprenant un dispositif de transfert (13) placé à la suite de l'organe distributeur-accélérateur (12) et destiné à éjecter la récolte dans un récipient de chargement (30), sachant que pour l'accélération variable de la récolte, la largeur d'une fente de passage de récolte (31) de l'organe distributeur-accélérateur (12) peut être adaptée à l'aide d'un dispositif de modification de fente (37), un dispositif de commande (14) étant associé au dispositif de modification de fente (37), qui active le dispositif de modification de fente (37) à l'aide d'un signal de commande généré, **caractérisée en ce que** le dispositif de commande (14) est conçu pour recevoir et évaluer des données générées par un dispositif de détection d'andains (20) placé sur la machine de récolte (1), lesquelles données comportent des propriétés de la récolte devant être ramassée sous la forme d'un andain (23) par la machine de récolte (1), et pour générer les signaux de commande destinés à adapter la largeur de fente de passage de récolte (31), en fonction de l'évaluation des données du dispositif de détection d'andains (20).

2. Machine de récolte (1) automotrice selon la revendication 1, **caractérisée en ce que** le dispositif de détection d'andains (20) est doté d'au moins un capteur optique (21) destiné à identifier une zone de champ devant, le capteur (21), au nombre d'au moins un, détectant la présence et/ou la forme de l'andain (23) devant la machine de récolte (1), et **en ce que** le dispositif de détection d'andains (20) transmet ces données au dispositif de commande (14).

3. Machine de récolte (1) automotrice selon la revendication 2, **caractérisée en ce que** le dispositif de commande (14) est conçu pour déduire un débit de récolte sur la base de la forme d'un andain (23).

4. Machine de récolte (1) automotrice selon une des revendications 1 à 3, **caractérisée en ce que** le dispositif de détection d'andains (20) est dotée d'au moins un capteur (24) qui est disposé le long du flux de récolte et détecte des propriétés de la récolte, et **en ce que** le dispositif de détection d'andains (20) transmet ces données au dispositif de commande (14).

5. Machine de récolte (1) automotrice selon une des revendications 1 à 4, **caractérisée en ce que** le dispositif de détection d'andains (20) est doté d'au moins un dispositif à capteur (25) qui est conçu pour la détection d'une hauteur de couche dans l'organe d'alimentation (3), et **en ce que** le dispositif de détection d'andains (20) transmet les données, déterminées par le dispositif à capteur (25), au nombre d'au moins un, au dispositif de commande (14) en vue de la détermination d'un débit de récolte.

6. Machine de récolte (1) automotrice selon une des revendications 3 à 5, **caractérisée en ce que** le dispositif de commande (14) présente une unité de mémoire (15) dans laquelle est enregistrée une valeur seuil relative ou absolue pour une variation du débit de récolte, valeur dont le dispositif de commande (14) interprète le dépassement comme indicateur pour l'adaptation de la largeur de la fente de passage de récolte (31).

7. Machine de récolte (1) automotrice selon une des revendications précédentes, **caractérisée en ce que** l'organe distributeur-accélérateur (12) présente un axe de rotation (33) qui est monté côté extrémités dans des éléments de guidage (34) disposés sur des parois latérales qui délimitent un carter (35) enveloppant au moins par portions l'organe distributeur-accélérateur (12), et **en ce que** le dispositif de modification de fente (37) comprend un système d'actionnement qui est destiné au déplacement (VR), notamment en translation, de l'organe distributeur-accélérateur (12) et permet de modifier la largeur de la fente de passage de récolte (31).

8. Machine de récolte (1) automotrice selon la revendication 7, **caractérisée en ce que** le système d'actionnement comprend des éléments d'entraînement (38, 39, 40) pouvant être actionnés par voie mécanique, hydraulique et/ou électromécanique.

9. Machine de récolte (1) automotrice selon une des revendications précédentes, **caractérisée en ce que** le dispositif de modification de fente (37) présente une caractéristique de réglage avec une évolution croissant de manière sensiblement progressive du réglage de la largeur de la fente de passage de récolte (31).

10. Machine de récolte (1) automotrice selon une des revendications précédentes, **caractérisée en ce que** le dispositif de modification de fente (37) est conçu pour régler la largeur de la fente de passage de récolte (31) à une valeur minimale de 2 mm, jusqu'à une valeur maximale de 80 mm.

11. Machine de récolte (1) automotrice selon une des revendications 6 à 10, **caractérisée en ce qu'**est enregistré(e) dans l'unité de mémoire (15), au moins une courbe caractéristique (44) ou un réseau de courbes caractéristiques pour la largeur à régler de la fente de passage de récolte (31), en fonction d'au moins une propriété de la récolte et/ou du débit de récolte, et **en ce que** le dispositif de commande (14) comprend une unité de calcul (16) qui évalue la courbe caractéristique (44), au nombre d'au moins une, ou le réseau de courbes caractéristiques, au nombre d'au moins un, en vue de l'activation du dispositif de modification de fente (37).

12. Machine de récolte (1) automotrice selon une des revendications précédentes, **caractérisée en ce que** le dispositif de commande (14) est conçu pour activer le dispositif de modification de fente (37) de manière à réduire la largeur de la fente de passage de récolte (31) à mesure que la siccité de la récolte augmente et/ou que le débit de récolte diminue.

13. Machine de récolte (1) automotrice selon une des revendications précédentes, **caractérisée en ce que** le dispositif de commande (14) est conçu pour l'activation automatique du dispositif de modification de fente (37).

14. Procédé pour faire fonctionner une machine de récolte agricole (1) automotrice, en particulier une ramasseuse-hacheuse, comprenant au moins un organe distributeur-accélérateur (12), destiné à l'accélération variable de la récolte, et comprenant un dispositif de transfert (13) placé à la suite de l'organe distributeur-accélérateur (12) et destiné à éjecter la récolte dans un récipient de chargement (30), sachant que pour l'accélération variable de la récolte, la largeur d'une fente de passage de récolte (31) de l'organe distributeur-accélérateur (12) peut être adaptée à l'aide d'un dispositif de modification de fente (37), le dispositif de modification de fente (37) étant activé par des signaux de commande générés par un dispositif de commande (14), **caractérisé en ce que** le dispositif de commande (14) reçoit et évalue des données qui sont générées par un dispositif de détection d'andains (20) et comportent des propriétés de la récolte devant être ramassée sous la forme d'un andain (23) par la machine de récolte (1), et **en ce que** le dispositif de commande (14) génère les signaux de commande destinés à adapter la largeur de fente de passage de récolte (31), en fonction de l'évaluation des données fournies par le dispositif de détection d'andains (20).
